# EUROPEAN PATENT APPLICATION

(11) **EP 4 741 220 A1**
(43) Date of publication of application: **13.05.2026**
(21) Application number: 25213778.1
(22) Date of filing: 05.11.2025
(51) Int. Cl.: B60L 58/13, B60L 58/14, B60L 58/16, B60L 3/12, B60L 3/00, B60L 58/20, B60L 58/22, H01M 10/44

(54) **DRIVING CONTROL APPARATUS AND METHOD FOR ELECTRIC VEHICLE**

(30) Priority: 12.11.2024 KR 20240160352
(71) Applicant: SAMSUNG SDI CO., LTD., Yongin-si, Gyeonggi-do 17084 (KR)
(72) Inventor: KIM, Jaemyung, 17084 Yongin-si (KR)
(74) Representative: Marks & Clerk LLP

(57) **Abstract**

A method for controlling driving of an electric vehicle using a battery pack (10) including battery cells as a power source in a battery management system (300) may include receiving a first ignition-on signal, activating an emergency driving mode, and discharging the battery pack (10) by setting a discharge voltage of the battery pack (10) in the emergency driving mode to a first discharge voltage that is lower than a normal discharge voltage of a normal driving mode.

## Description

### BACKGROUND

### 1. Field

This disclosure relates to a driving control apparatus and method for an electric vehicle.

### 2. Description of the Related Art

Electric vehicles use electric motors to drive. The electric vehicles use battery packs, which are high-voltage power sources, to drive the electric motors. The battery pack is a device that stores electric energy to supply the electric power suitable for an electric vehicle.

The battery pack of an electric vehicle is controlled to prevent the battery pack from being completely discharged because the performance of the battery pack will continuously deteriorate if the battery pack is completely discharged. However, a situation may occur where the voltage of the battery pack of an electric vehicle is discharged to the discharge end voltage. In this case, the battery pack may be charged using a dedicated battery charger, but there is no solution if there is no dedicated battery charger.

### SUMMARY

At least one or more embodiments provide a driving control apparatus and method for an electric vehicle capable of controlling driving of the electric vehicle in an emergency mode in which driving of the electric vehicle becomes difficult due to a battery pack being discharged toward a discharge end voltage.

According to one or more embodiments, a method for controlling an electric vehicle using a battery pack including battery cells as a power source in a battery management system includes receiving a first ignition-on signal, activating a first discharge voltage mode (which may be termed an emergency driving mode), and discharging the battery pack by setting a discharge voltage of the battery pack in the emergency driving mode to a first discharge voltage that is lower than a normal discharge voltage of a normal driving mode.

The discharging of the battery pack may include connecting the battery pack to an inverter of the electric vehicle, controlling the discharging of the battery pack based on the first discharge voltage, and increasing a cumulative number of operations of the emergency driving mode.

The method may further include determining whether the cumulative number of the operations of the emergency driving mode is less than a first number.

The method may further include indicating the battery pack is exhausted when the cumulative number of the operations of the emergency driving mode is greater than or equal to a first number.

The discharging of the battery pack may include controlling the discharging of the battery pack in a first discharge voltage mode in which the discharge voltage includes the first discharge voltage, and controlling the discharging of the battery pack in a second discharge voltage mode in which the discharge voltage includes a second discharge voltage that is lower than the first discharge voltage.

The controlling the discharge of the battery pack in the second discharge voltage mode may include determining a second ignition-on signal is received while the battery pack is not charged.

The controlling the discharge of the battery pack in the first discharge voltage mode may include determining whether a cumulative number of operations of the first discharge voltage mode is less than a first number, wherein the controlling the discharge of the battery pack in the second discharge voltage mode includes determining whether a cumulative number of operations of the second discharge voltage mode is less than a second number.

The second number may be less than the first number.

Anodes of the battery cells may include a mixture of graphite and silicon as an anode active material.

The method may further include operating in the emergency driving mode when a remaining capacity of the battery pack is low. For example where the remaining capacity is below a threshold value.

According to one or more other embodiments, an apparatus for controlling driving of an electric vehicle, which uses a battery pack including battery cells as a power source, includes, a communication circuit configured to receive a first ignition-on signal, and a control circuit configured to determine an emergency driving mode is activated in response to the first ignition-on signal, to connect the battery pack to an inverter of the electric vehicle in the emergency driving mode, to set a discharge voltage of the battery pack to be lower than a normal discharge voltage of a normal driving mode, and to discharge the battery pack.

The control circuit may be configured to determine a cumulative number of operations of the emergency driving mode, and to operate in the emergency driving mode when the cumulative number of the operations is less than a first number.

The emergency driving mode may include a first discharge voltage mode in which the discharge voltage includes a first discharge voltage that is lower than the normal discharge voltage, and a second discharge voltage mode in which the discharge voltage includes a second discharge voltage that is lower than the first discharge voltage, wherein the control circuit is configured to default to the first discharge voltage mode over the second discharge voltage mode.

The control circuit may be configured to determine whether to operate in the second discharge voltage mode after the first discharge voltage mode.

The control circuit may be configured to operate in the second discharge voltage mode when a second ignition-on signal is received through the communication circuit while the battery pack is not charged.

The control circuit may be configured to operate in the first discharge voltage mode when a cumulative number of operations of the first discharge voltage mode is less than a first number, and to operate in the second discharge voltage mode when a cumulative number of operations of the second discharge voltage mode is less than a second number.

The second number may be less than the first number.

Anodes of the battery cells may include a mixture of graphite and silicon as an anode active material. At least some of the above and other features of the invention are set out in the claims.

### BRIEF DESCRIPTION OF THE DRAWINGS

FIG. 1 is a block diagram showing an example of an electric vehicle according to one or more embodiments.
FIG. 2 is a graph showing the charge and discharge curves of a half-cell and a full-cell in which an anode made of a conventional graphite-only material and a cathode made of an NCA (LiNiCoAlO₂) material are used.
FIG. 3 is a graph showing the charge curve and discharge curve of a half-cell and a full-cell in which an anode made of a graphite and silicon mixed material and a cathode made of an NCA material are used according to one or more embodiments.
FIG. 4 is a flowchart showing a driving control method according to an emergency driving mode according to one or more embodiments.
FIG. 5 is a flowchart showing a driving control method according to an emergency driving mode according to one or more other embodiments.
FIG. 6 is a block diagram showing a driving control apparatus according to one or more embodiments.

### DETAILED DESCRIPTION

Aspects of some embodiments of the present disclosure and methods of accomplishing the same may be understood more readily by reference to the detailed description of embodiments and the accompanying drawings. The described embodiments are provided as examples so that this disclosure will be thorough and complete, and will fully convey the aspects of the present disclosure to those skilled in the art. Accordingly, processes, elements, and techniques that are redundant, that are unrelated or irrelevant to the description of the embodiments, or that are not necessary to those having ordinary skill in the art for a complete understanding of the aspects of the present disclosure may be omitted. Unless otherwise noted, like reference numerals, characters, or combinations thereof denote like elements throughout the attached drawings and the written description, and thus, repeated descriptions thereof may be omitted.

The described embodiments may have various modifications and may be embodied in different forms, and should not be construed as being limited to only the illustrated embodiments herein. The use of "can," "may," or "may not" in describing an embodiment corresponds to one or more embodiments of the present disclosure.

A person of ordinary skill in the art would appreciate, in view of the present disclosure in its entirety, that each suitable feature of the various embodiments of the present disclosure may be combined or combined with each other, partially or entirely, and may be technically interlocked and operated in various suitable ways, and each embodiment may be implemented independently of each other or in conjunction with each other in any suitable manner unless otherwise stated or implied.

It will be understood that when an element, layer, region, or component (e.g., an apparatus, a device, a circuit, a wire, an electrode, a terminal, a conductive film, etc.) is referred to as being "formed on," "on," "connected to," or "(operatively, functionally, or communicatively) coupled to" another element, layer, region, or component, it can be directly formed on, on, connected to, or coupled to the other element, layer, region, or component, or indirectly formed on, on, connected to, or coupled to the other element, layer, region, or component such that one or more intervening elements, layers, regions, or components may be present. In addition, this may collectively mean a direct or indirect coupling or connection and an integral or non-integral coupling or connection.

For example, when a layer, region, or component is referred to as being "electrically connected" or "electrically coupled" to another layer, region, or component, it can be directly electrically connected or coupled to the other layer, region, and/or component or one or more intervening layers, regions, or components may be present. The one or more intervening components may include a switch, a transistor, a resistor, an inductor, a capacitor, a diode and/or the like. Accordingly, a connection is not limited to the connections illustrated in the drawings or the detailed description and may also include other types of connections. In describing embodiments, an expression of connection indicates electrical connection unless explicitly described to be direct connection, and "directly connected/directly coupled," or "directly on," refers to one component directly connecting or coupling another component, or being on another component, without an intermediate component.

Meanwhile, other expressions describing relationships between components, such as "between," "immediately between" or "adjacent to" and "directly adjacent to," may be construed similarly. It will be understood that when an element or layer is referred to as being "between" two elements or layers, it can be the only element or layer between the two elements or layers, or one or more intervening elements or layers may also be present.

For the purposes of this disclosure, expressions such as "at least one of," or "any one of," or "one or more of" when preceding a list of elements, modify the entire list of elements and do not modify the individual elements of the list. For example, "at least one of X, Y, and Z," "at least one of X, Y, or Z," "at least one selected from the group consisting of X, Y, and Z," and "at least one selected from the group consisting of X, Y, or Z" may be construed as X only, Y only, Z only, any combination of two or more of X, Y, and Z, such as, for instance, XYZ, XY, YZ, and XZ, or any variation thereof. Similarly, the expressions "at least one of A and B" and "at least one of A or B" may include A, B, or A and B. As used herein, "or" generally means "and/or," and the term "and/or" includes any and all combinations of one or more of the associated listed items. For example, the expression "A and/or B" may include A, B, or A and B. Similarly, expressions such as "at least one of," "a plurality of," "one of," and other prepositional phrases, when preceding a list of elements, modify the entire list of elements and do not modify the individual elements of the list. When "C to D" is stated, it means C or more and D or less, unless otherwise specified.

It will be understood that, although the terms "first," "second," "third," etc., may be used herein to describe various elements, components, regions, layers and/or sections, these elements, components, regions, layers and/or sections should not be limited by these terms. These terms do not correspond to a particular order, position, or superiority, and are only used to distinguish one element, member, component, region, area, layer, section, or portion from another element, member, component, region, area, layer, section, or portion. Thus, a first element, component, region, layer or section described below could be termed a second element, component, region, layer or section, without departing from the scope of the present disclosure. The description of an element as a "first" element may not require or imply the presence of a second element or other elements. The terms "first," "second," etc. may also be used herein to differentiate different categories or sets of elements. For conciseness, the terms "first," "second," etc. may represent "first-category (or first-set)," "second-category (or second-set)," etc., respectively.

The terminology used herein is for the purpose of describing embodiments only and is not intended to be limiting of the present disclosure. As used herein, the singular forms "a" and "an" are intended to include the plural forms as well, while the plural forms are also intended to include the singular forms, unless the context clearly indicates otherwise. It will be further understood that the terms "comprises," "comprising," "have," "having," "includes," and "including," when used in this specification, specify the presence of the stated features, integers, steps, operations, elements, and/or components, but do not preclude the presence or addition of one or more other features, integers, steps, operations, elements, components, and/or groups thereof.

When one or more embodiments may be implemented differently, a specific process order may be performed differently from the described order. For example, two consecutively described processes may be performed substantially at the same time or performed in an order opposite to the described order.

As used herein, the terms "substantially," "about," "approximately," and similar terms are used as terms of approximation and not as terms of degree, and are intended to account for the inherent deviations in measured or calculated values that would be recognized by those of ordinary skill in the art. For example, "substantially" may include a range of +/- 5 % of a corresponding value. "About" or "approximately," as used herein, is inclusive of the stated value and means within an acceptable range of deviation for the particular value as determined by one of ordinary skill in the art, considering the measurement in question and the error associated with measurement of the particular quantity (i.e., the limitations of the measurement system). For example, "about" may mean within one or more standard deviations, or within ± 30%, 20%, 10%, 5% of the stated value. Further, the use of "may" when describing embodiments of the present disclosure refers to "one or more embodiments of the present disclosure." Furthermore, the expression "being the same" may mean "being substantially the same". In other words, the expression "being the same" may include a range that can be tolerated by those of ordinary skill in the art. The other expressions may also be expressions from which "substantially" has been omitted.

In some embodiments well-known structures and devices may be described in the accompanying drawings in relation to one or more functional blocks (e.g., block diagrams), units, and/or modules to avoid unnecessarily obscuring various embodiments. Those skilled in the art will understand that such block, unit, and/or module are/is physically implemented by a logic circuit, an individual component, a microprocessor, a hard wire circuit, a memory element, a line connection, and other electronic circuits. This may be formed using a semiconductor-based manufacturing technique or other manufacturing techniques. The block, unit, and/or module implemented by a microprocessor or other similar hardware may be programmed and controlled using software to perform various functions discussed herein, optionally may be driven by firmware and/or software. In addition, each block, unit, and/or module may be implemented by dedicated hardware, or a combination of dedicated hardware that performs some functions and a processor (for example, one or more programmed microprocessors and related circuits) that performs a function different from those of the dedicated hardware. In addition, in some embodiments, the block, unit, and/or module may be physically separated into two or more interact individual blocks, units, and/or modules without departing from the scope of the present disclosure. In addition, in some embodiments, the block, unit and/or module may be physically combined into more complex blocks, units, and/or modules without departing from the scope of the present disclosure.

Unless otherwise defined, all terms (including technical and scientific terms) used herein have the same meaning as commonly understood by one of ordinary skill in the art to which the present disclosure belongs. It will be further understood that terms, such as those defined in commonly used dictionaries, should be interpreted as having a meaning that is consistent with their meaning in the context of the relevant art and/or the present specification, and should not be interpreted in an idealized or overly formal sense, unless expressly so defined herein.

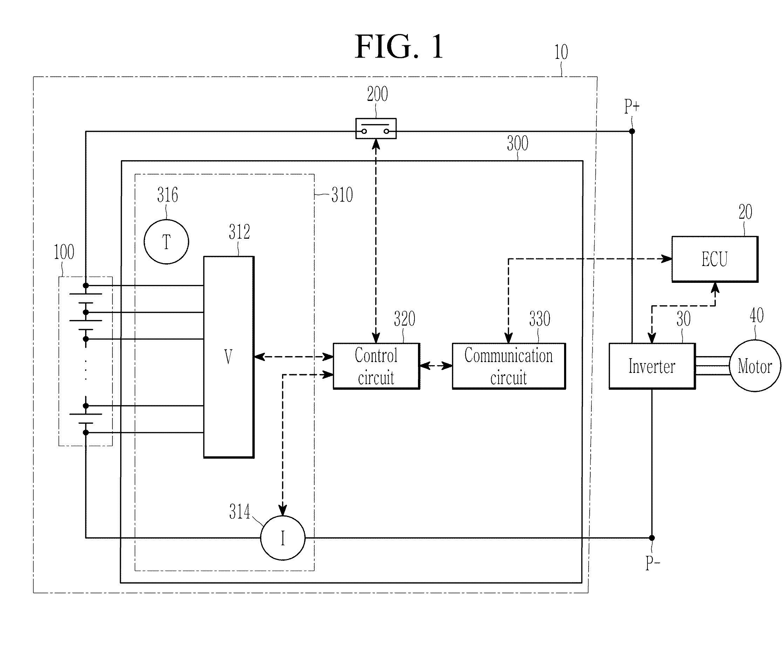

FIG. 1 is a block diagram showing an electric vehicle according to one or more embodiments.

Referring to FIG. 1, an electric vehicle may include a battery pack 10, an electronic control unit (ECU) 20 that is a vehicle controller, an inverter 30, and an electric motor 40.

The battery pack 10 may store electric energy to supply the electric power suitable for an electric vehicle. The battery pack 10 may be connected to an external charging device or to a load through terminals P+ and P-, and the battery pack 10 may be charged by the charging device, and may be discharged by the load.

In one or more embodiments, the ECU 20 may be configured to transmit an ignition-on signal to the BMS 300 in response to an ignition button in the electric vehicle being switched to an ignition-on position by the user. The ECU 20 may be configured to transmit an ignition-off signal to the BMS 300 in response to the ignition button being switched to an ignition-off position by the user.

The inverter 30 may be connected between terminals P+ and P- of a battery pack 10, and may be configured to convert direct current (DC) from a battery 100 included in the battery pack 10 into alternating current (AC).

The electric motor 40 may be driven using AC power from an inverter 30. For example, a three-phase AC motor may be used as the electric motor 40. Components within an electric vehicle that receive discharge power from a battery 100, including the inverter 30 and the electric motor 40, may be referred to as an electric load.

The battery pack 10 may include a battery 100, a relay 200, and a battery management system (BMS) 300.

The battery 100 may provide high voltage and high capacity by including a plurality of battery modules electrically connected to each other in series and/or in parallel. For convenience, one battery module is illustrated in FIG. 1. For example, the voltage of a battery pack 10 used in an electric vehicle is usually close to about 400 V, and the capacity may be about 60 kWh or more.

The battery module may include a plurality of battery cells. The plurality of battery cells may be connected in series. Each of the plurality of battery cells may be, for example, a lithium-ion cell. The battery cells may include a cathode, an anode, a separator, and an electrolyte. The electrolyte may exist between the cathode and the separator, and between the anode and the separator. The battery cell may be charged by moving lithium ions from the cathode to the anode, and by storing lithium ions in the anode. As lithium ions from the anode move to the cathode, and as the electrons separated from the lithium ions move along a conductor, electricity is generated, and the battery cell may be discharged.

A cathode active material, which is the material that constitutes the cathode, may be made using nickel, cobalt, aluminum, manganese, etc. For example, an NCA cathode may include nickel as the main component, cobalt, aluminum, and lithium oxides.

An anode active material, which is the material that constitutes the anode, may mainly be graphite, which may stably store many ions. Silicon has the advantages of higher energy density, shorter charging time, and higher output, as compared to graphite, although silicon may swell if charging and discharging repeatedly.

According to one or more embodiments, a small amount (for example, about 1% to about 10%) of silicon may be added to a graphite material, and the graphite material with the added amount of silicon may be used as the anode active material.

The relay 200 may control current paths during charging and discharging of the battery 100. The relay 200 may be connected between the battery 100 and the terminal P+. In one or more embodiments, if the relay 200 is turned on during operation of the inverter 30 and the electric motor 40 and/or the charging device, the battery 100 may enter a charging mode or a discharging mode. If the relay 200 is turned off while the battery 100 is operating in the charge mode or the discharge mode, the battery 100 may be switched to an idle mode.

The relay 200 may be turned on and off in response to a switching signal from the BMS 300. The relay 200 may be a mechanical contactor that is turned on and off by the magnetic force of a coil, or a semiconductor switch, such as a metal oxide semiconductor field effect transistor (MOSFET).

The BMS 300 may include a sensing circuit 310 and a control circuit 320. The BMS 300 may further include a communication circuit 330.

The sensing circuit 310 may be configured to acquire status/state parameters of battery cells. The status/state parameters of a battery cell may include at least one of voltage, current, and/or temperature of the battery cell. The sensing circuit 310 may include a voltage detector 312, a current detector 314, and/or a temperature detector 316.

The voltage detector 312 may be connected to a positive terminal and to a negative terminal of each of the plurality of battery cells included in the battery 100, may measure the voltage across both ends of each of the battery cells, and may generate a voltage signal representing the measured voltage of each of the battery cells, and may transmit the voltage signal to the control circuit 320.

The current detector 314 may be connected in series to the battery 100 through a current path between the battery 100 and the inverter 30. The current detector 314 may measure the charge/discharge current flowing through the battery 100, and may generate a current signal representing the measured charge/discharge current, and may transmit the current signal to the control circuit 320. Because the plurality of battery cells are connected in series, a common charge/discharge current may flow through the plurality of battery cells. The current detector 314 may be implemented using one or a combination of two or more of known current detection elements, such as a shunt resistor, a hall effect element, etc.

The temperature detector 316 may measure the battery temperature, which is the temperature of the battery 100, and may generate a temperature signal representing the measured battery temperature, and may transmit the temperature signal to the control circuit 320. The temperature detector 316 may be placed inside a case of the battery 100 so as to measure a temperature close to the actual temperature of the battery 100. For example, the temperature detector 316 may be attached to the surface of at least one battery cell included in the battery 100, and may detect the surface temperature of the battery cell as the battery temperature.

The communication circuit 330 may be configured to support wired or wireless communication between the control circuit 320 and the ECU 20. The wired communication may be, for example, controller area network (CAN) communication, and wireless communication may be, for example, Zigbee^{®} or Bluetooth^{®} communication. The communication circuit 330 may include an output device that provides information received from the control circuit 320 and/or the ECU 20 in a form recognizable to a user (driver). The output device may be, for example, a display or a speaker.

The control circuit 320 may be connected to the relay 200, the sensing circuit 310, and the communication circuit 330. The control circuit 320 may collect voltage signals from the voltage detector 312, the current signal from the current detector 314, and the temperature signal from the temperature detector 316. In one or more embodiments, the control circuit 320 may convert and record each analog signal collected from the voltage detector 312, current detector 314, and temperature detector 316 into a digital value using an analog-to-digital converter (ADC) provided internally.

The control circuit 320 may be implemented in hardware using at least one of application specific integrated circuits (ASICs), digital signal processors (DSPs), digital signal processing devices (DSPDs), programmable logic devices (PLDs), field programmable gate arrays (FPGAs), microprocessors, application processors (Aps), central processing units (CPUs), graphic processing units (GPUs), and/or other electrical units for performing functions.

The control circuit 320 may control and manage the overall operation of the battery pack 10. The control circuit 320 may monitor the overall status of the battery 100, and of the battery cells included in the battery 100, using information collected from the voltage detector 312, the current detector 314, and/or the temperature detector 316, and may perform various control functions to adjust the status of the battery 100 and of the battery cells included in the battery 100. In one or more embodiments, the control circuit 320 may monitor the voltages and current of the battery 100, may control charging and discharging of the battery 100, and may perform cell-balancing operations. In one or more embodiments, the control circuit 320 may monitor the temperature of the battery 100, and may control the temperature of the battery 100 by cooling, ventilating, C-rate changing, etc., if suitable, and may cut off the connection between the battery 100 and the load through the relay 200.

The control circuit 320 may turn on the relay 200 in response to an ignition-on signal. The control circuit 320 may turn off the relay 200 in response to the ignition-off signal. The ignition-on signal may be a signal requesting a transition from idle mode to charge mode or discharge mode. The ignition-off signal may be a signal requesting a transition from charge mode or discharge mode to idle mode.

In some embodiments, on and/or off control of the relay 200 may be performed by the ECU 20 instead of the control circuit 320.

The control circuit 320 may monitor the voltage of each of the plurality of battery cells while charging the battery pack 10, and may identify a maximum voltage of the plurality of battery cells. The maximum voltage may represent the maximum voltage among the voltages of the plurality of battery cells.

The control circuit 320 may monitor the voltage of each of the plurality of battery cells during discharge of the battery pack 10, and may identify a minimum voltage. The minimum voltage may represent the minimum voltage among the voltages of the plurality of battery cells.

The control circuit 320 may stop charging the battery pack 10 if the maximum voltage reaches an upper limit voltage (e.g., a predetermined upper limit voltage, such as about 4.25 V) during charging of the battery pack 10. The control circuit 320 may perform constant current-constant voltage charging in charging mode.

The control circuit 320 may stop discharging the battery pack 10 if the minimum voltage reaches a lower limit voltage (e.g., a predetermined lower limit voltage, such as about 3 V) during discharging of the battery pack 10. At this time, the lower limit voltage may be the discharge voltage set in a normal driving mode of the electric vehicle, and in some cases may be called a discharge end voltage. The discharge voltage refers to the minimum limit voltage at which the battery 100 may be safely discharged during operation.

The control circuit 320 may turn off the relay 200 to reduce or prevent the likelihood of further discharge if the remaining capacity of the battery pack 10 becomes less than the minimum capacity suitable for driving the electric vehicle during discharge of the battery pack 10. At this time, the minimum capacity may be the capacity of the battery pack 10 if battery pack 10 has been discharged to a set discharge voltage. If the relay 200 is turned off, the electric vehicle, which may be driving, stops.

In one or more embodiments, the control circuit 320 may control the minimum voltages of the plurality of battery cells during discharge of the battery pack 10 so that it does not fall below the discharge voltage.

According to one or more embodiments, if the electric vehicle stops due to insufficient remaining capacity of the battery pack 10, and if charging the battery pack 10 is difficult, the control circuit 320 may lower the discharge voltage of the battery cell (e.g., from a normal discharge voltage) to enable emergency driving of the electric vehicle. This may be possible by using silicon as the anode active material in the battery cell.

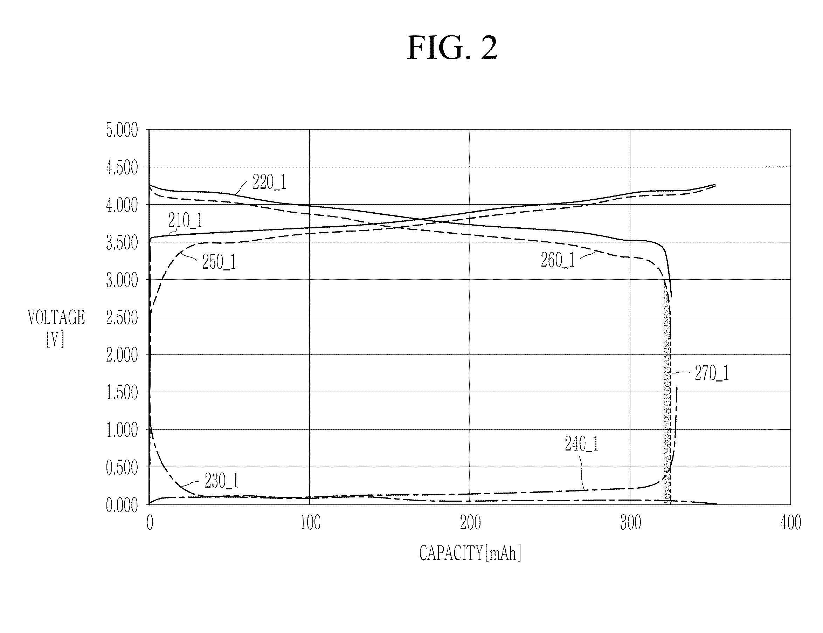

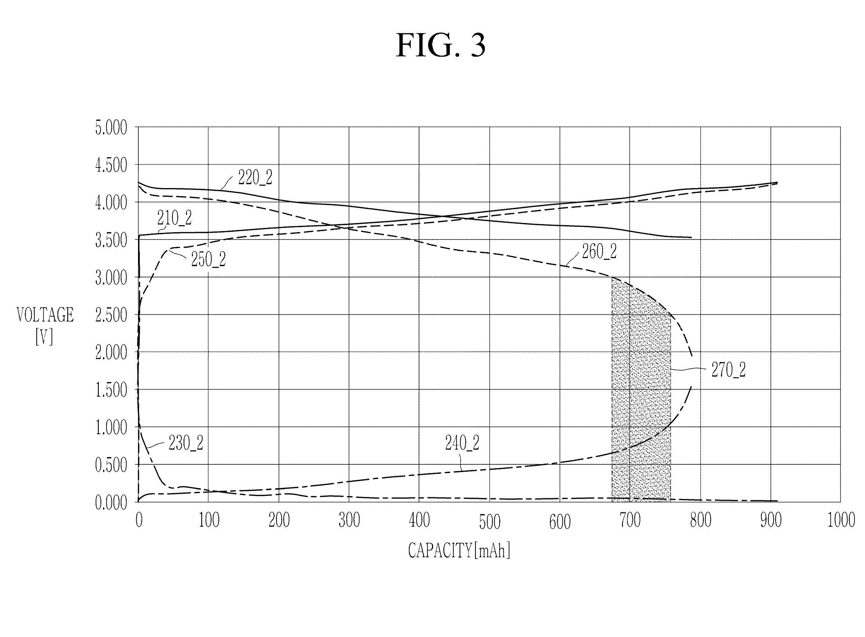

FIG. 2 is a graph showing the charge and discharge curves of a half-cell and a full-cell in which an anode made of a conventional graphite-only material and a cathode made of an NCA (LiNiCoAlO₂) material are used, and FIG. 3 is a graph showing the charge curve and discharge curve of a half-cell and a full-cell in which an anode made of a graphite and silicon mixed material and a cathode made of an NCA material are used according to one or more embodiments.

Referring to FIGS. 2 and 3, in the charge/discharge curve, the y-axis may represent voltage, and the x-axis may represent capacity. The higher the y value, the higher the output of the battery pack 10, and the higher the x value, the longer the battery pack 10 may be used.

In FIG. 2, 210_1 is a charge curve of a cathode half-cell made of NCA material, and 220_1 is a discharge curve of a cathode half-cell made of NCA material. 230_1 is a charge curve of an anode half-cell made of graphite only, and 240_1 is a discharge curve of an anode half-cell made of graphite only. 250_1 is a charge curve of a full cell including a cathode made of NCA material and an anode made of graphite only, and 260_1 is a discharge curve of a full cell including a cathode made of NCA material and an anode made of graphite only.

In FIG. 3, 210_2 is a charge curve of a cathode half-cell including NCA material, and 220_2 is a discharge curve of an anode half-cell including NCA material. 230_2 is a charge curve of an anode half-cell including graphite and silicon mixture material, and 240_2 is a discharge curve of an anode half-cell including graphite and silicon mixture material. 250_2 is a charge curve of a full cell including a cathode made of NCA material and an anode made of graphite and silicon mixture material, and 260_2 is the discharge curve of a full cell including a cathode made of NCA material and an anode made of graphite and silicon mixture material. The full cell including a cathode made of NCA material and an anode made of graphite and silicon mixture material may be, for example, the battery cell.

Referring to FIGS. 2 and 3, if the battery cell is charged, the voltage of the anode decreases as the lithium concentration in the anode active material increases, and the voltage of the cathode increases as the lithium concentration in the cathode active material decreases, causing the voltage of the battery cell to increase.

If the battery cell is discharged, the voltage of the anode increases as the lithium concentration in the anode active material decreases, and the voltage of the cathode decreases as the lithium concentration in the cathode active material increases, causing the voltage of the battery cells to decrease.

As described above, the control circuit 320 turns off the relay 200 to stop discharging if the voltage of the battery cell (e.g., during discharging of the battery pack 10) reaches a set discharge voltage (e.g., about 3 V).

At this time, looking at 270_1 of FIG. 2, even if the discharge voltage set to about 3 V is lowered to about 2.5 V, there is almost no additional discharge capacity, and the output (power) that may be provided might not be much.

In one or more embodiments, referring to 270_2 of FIG. 3, if the discharge voltage set to about 3 V (e.g., in a normal mode) is lowered to about 2.5 V (e.g., in an emergency driving mode), the available output (power) is significantly increased, as compared to 270_1 of FIG. 2.

Comparing FIGS. 2 and 3, if a mixture of graphite and silicon is used as the anode active material, additional power that may be provided is generated by lowering the discharge voltage, as compared to using graphite alone as the anode active material. The BMS 300 may utilize these characteristics to enable driving of the electric vehicle by lowering the discharge voltage (e.g., to a first discharge voltage) in an emergency driving mode (e.g., a low charge mode or low battery mode).

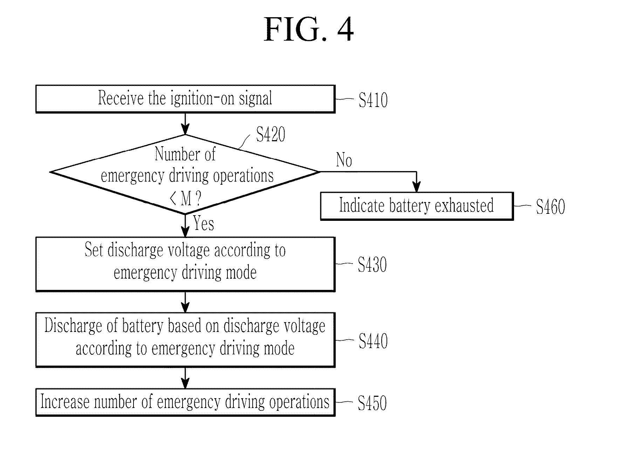

FIG. 4 is a flowchart showing a driving control method according to an emergency driving mode according to one or more embodiments.

Referring to FIG. 4, if it is difficult to charge the battery pack 10 while an ignition of the electric vehicle is turned off, the user may attempt ignition-on of the vehicle by pressing an ignition button.

The ECU 20 may transmit an ignition-on signal to the BMS 300 in response to the ignition-on position of the ignition button from the user.

If the control circuit 320 of the BMS 300 receives the ignition-on signal (S410), the BMS 300 may check the remaining capacity of the battery pack 10. The control circuit 320 of the BMS 300 may determine that driving (e.g., normal driving) is impossible, or is not allowed, based on the remaining capacity of the battery pack 10, and may activate the emergency driving mode.

In the emergency driving mode, the control circuit 320 of the BMS 300 may check the number of emergency driving operations, which is the number of times the emergency driving mode is operated (S420).

The control circuit 320 of the BMS 300 may set a discharge voltage according to the emergency driving mode (S430) if the number of emergency driving operations is less than a number (e.g., a set number, or a first number) M (S430).

The discharge voltage according to the emergency driving mode may be lower than the discharge voltage (e.g., a normal discharge voltage) in normal driving mode. For example, the discharge voltage in normal driving mode may be set to about 3 V, and the discharge voltage in emergency driving mode may be set to about 2.5 V.

In one or more embodiments, because operating the battery pack 10 by lowering the discharge voltage may have a negative effect on the life of the battery 100, the number of times the discharge voltage is lowered may be limited, and the number M may be determined.

The control circuit 320 of the BMS 300 may turn on the relay 200, and may control the discharge of the battery 100 based on the discharge voltage according to the emergency driving mode (S440). As shown in FIG. 3, by lowering the discharge voltage from about 3 V to about 2.5 V, the battery pack 10 may provide additional power, and the electric vehicle may be driven for a distance (e.g., a longer distance) corresponding to the additional power.

Next, the control circuit 320 of the BMS 300 may record the number of emergency driving operations. The control circuit 320 of the BMS 300 may increase the number of emergency driving operations (e.g., a tally of emergency driving operations) by 1 (S450).

In one or more embodiments, if the number of emergency driving operations is greater than or equal to the set number M (S420), the control circuit 320 of the BMS 300 may indicate battery exhausted (S460), and may indicate that further driving is difficult or not advisable.

Through this method, the electric vehicle may secure additional driving distance in emergencies, and may move to the nearest charging station to charge the battery pack 10.

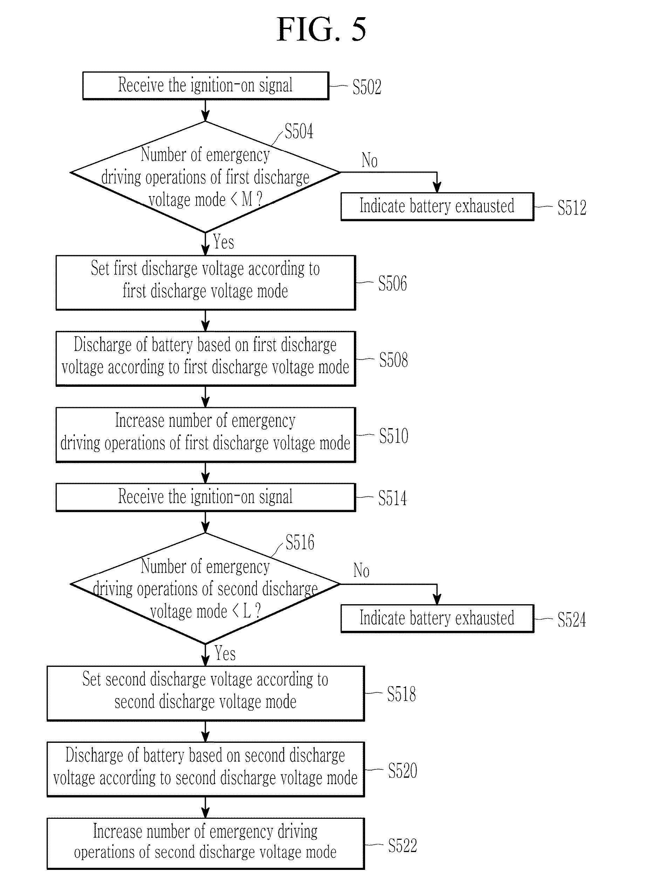

FIG. 5 is a flowchart showing a driving control method according to an emergency driving mode according to one or more other embodiments.

Referring to FIG. 5, the operations S502 to S512 may correspond to operations S410 to S460 described in FIG. 4.

If the control circuit 320 of the BMS 300 receives an ignition-on signal (S502), the control circuit 320 may check the remaining capacity of the battery pack 10. The control circuit 320 of the BMS 300 may determine that driving is impossible, not advised, or not allowed based on the remaining capacity of the battery pack 10, and may activate the emergency driving mode.

According to one or more embodiments, the emergency driving mode may include a first discharge voltage mode and a second discharge voltage mode. In emergency driving mode, the control circuit 320 of the BMS 300 may first operate in the first discharge voltage mode. In the first discharge voltage mode, the control circuit 320 of the BMS 300 may check the number of emergency driving operations in the first discharge voltage mode.

If the number of emergency driving operations in the first discharge voltage mode is less than a number (e.g., a first number, or a set number) M (S504), the control circuit 320 of the BMS 300 may set a first discharge voltage according to the first discharge voltage mode (S506). The first discharge voltage according to the first discharge voltage mode may be a lower voltage than the discharge voltage in the normal driving mode (e.g., a normal discharge voltage). For example, the discharge voltage in normal driving mode may be set to about 3 V, and the first discharge voltage according to the first discharge voltage mode may be set to about 2.5 V.

The control circuit 320 of the BMS 300 may turn on the relay 200, and may control the discharge of the battery 100 based on the first discharge voltage according to the first discharge voltage mode (S508). As shown in FIG. 3, by lowering the discharge voltage from about 3 V to about 2.5 V, the battery pack 10 may provide additional power, and the electric vehicle may be driven for a distance corresponding to the additional power.

Next, the control circuit 320 of the BMS 300 may record the number (e.g., a total number, or a cumulative number) of emergency driving operations in the first discharge voltage mode. The control circuit 320 of the BMS 300 may increase the number of emergency driving operations in the first discharge voltage mode by 1 (S510).

In one or more embodiments, if the number of emergency driving operations in first discharge voltage mode is greater than or equal to the set number M (S504), the control circuit 320 of the BMS 300 may indicate battery exhausted (e.g., indicate low battery) (S512), and may indicate that further driving is difficult or limited.

Even though additional power is provided to the electric vehicle by discharging the battery 100 at the first discharge voltage according to the first discharge voltage mode, there may be cases where charging the battery pack 10 is difficult. For example, if the available driving distance by discharging the battery 100 according to the first discharge voltage is shorter than the distance from a location where the ignition was initially turned off to the nearest charging station, the ignition of the electric vehicle may be turned off again before reaching the nearest charging station. In such cases, the user may attempt ignition-on of the vehicle again by pressing an ignition button, in one or more embodiments.

The control circuit 320 of the BMS 300 may operate in the second discharge voltage mode if the BMS 300 receives an ignition-on signal again (S514) while the battery pack 10 is not charged.

In the second discharge voltage mode, the control circuit 320 of the BMS 300 may check the number of emergency driving operations in the second discharge voltage mode (S516).

If the number of emergency driving operations in the second discharge voltage mode is less than a number (e.g., a set number, or a second number) L (S516), the control circuit 320 of the BMS 300 may set a second discharge voltage according to the second discharge voltage mode (S518).

The second discharge voltage according to the second discharge voltage mode may be set to be lower than the first discharge voltage according to the first discharge voltage mode. For example, the first discharge voltage according to the first discharge voltage mode may be set to about 2.5 V, and the second discharge voltage according to the second discharge voltage mode may be set to about 2.2 V.

In one or more embodiments, the second discharge voltage according to the second discharge voltage mode is set lower than the first discharge voltage according to the first discharge voltage mode, and thus, operating in the second discharge voltage mode, as compared to the first discharge voltage mode, may have a greater impact on the life of the battery pack 10. Consequently, the number L may be set to be a value that is less than the number M. For example, the number M may be set to about 25 times, and the number L may be set to about 5 times.

The control circuit 320 of the BMS 300 may turn on the relay 200, and may control the discharge of the battery 100 based on the second discharge voltage according to the second discharge voltage mode (S520). As shown in FIG. 3, by lowering the discharge voltage from about 2.5 V to about 2.2 V, the battery pack 10 may provide additional power, and the electric vehicle may be driven for a distance corresponding to the additional power.

Next, the control circuit 320 of the BMS 300 may record the number of emergency driving operations in the second discharge voltage mode. The control circuit 320 of the BMS 300 may increase the number of emergency driving operations of the second discharge voltage mode by 1 (S522).

In one or more embodiments, if the number of emergency driving operations in the second discharge voltage mode is greater than or equal to the set number L (S516), the control circuit 320 of the BMS 300 may indicate battery exhausted (e.g., low battery) (S524), and may indicate that further driving is difficult, limited, or not allowed.

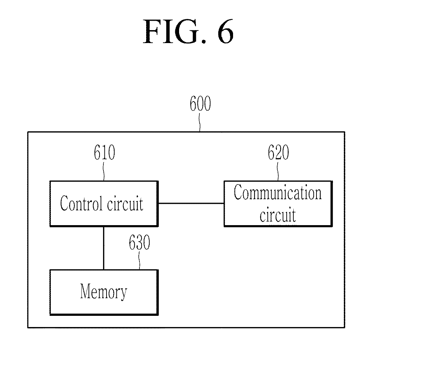

FIG. 6 is a block diagram showing a driving control apparatus according to one or more embodiments.

Referring to FIG. 6, the driving control apparatus 600 may include a control circuit 610, a communication circuit 620, and a memory 630.

The control circuit 610 may be implemented in hardware using at least one of ASICs, DSPs, DSPDs, PLDs, FPGAs, microprocessors, APs, CPUs, GPUs, and/or other electrical units for performing functions. The control circuit 610 may be any semiconductor device that executes commands of a program stored in the memory 630. The control circuit 610 may execute commands of the program stored in the memory 630 to perform the driving control operation described with reference to FIGS. 1 to 5.

The communication circuit 620 may perform a communication role between the control circuit 610 and the ECU 20. The communication circuit 620 may transmit an ignition-on signal, an ignition-off signal, etc. from the ECU 20 to the control circuit 610, and may transmit a battery discharge signal, etc. from the control circuit 610 to the ECU 20.

Such the driving control apparatus 600 may be implemented within the BMS 300 or may be the BMS (300) itself. In this case, the control circuit 610 and the communication circuit 620 may be the control circuit 320 and the communication circuit 330, respectively illustrated in FIG. 1.

According to at least one or more embodiments, in an emergency driving mode, where the battery pack is discharged to a discharge voltage and driving of the electric vehicle becomes difficult, additional driving distance may be provided by lowering the discharge voltage of the battery pack.

Embodiments have been disclosed herein, and although specific terms are employed, they are used and are to be interpreted in a generic and descriptive sense only and not for purpose of limitation. In some instances, as would be apparent to one of ordinary skill in the art as of the filing of the present application, features, characteristics, and/or elements described in connection with a particular embodiment may be used singly or in combination with features, characteristics, and/or elements described in connection with other embodiments unless otherwise specifically indicated. It will be understood by those of skill in the art that various changes in form and details may be made without departing from the scope of the present disclosure as set forth in the following claims.

## Claims

1. A method for controlling an electric vehicle using a battery pack comprising battery cells as a power source, the method comprising:
receiving a first ignition-on signal;
activating a first discharge voltage mode in response to the first ignition-on signal;
setting a discharge voltage of the battery pack in the first discharge voltage mode to a first discharge voltage that is lower than a normal discharge voltage of a normal driving mode; and
discharging the battery pack based on the first discharge voltage.

2. The method as claimed in claim 1, wherein the discharging of the battery pack comprises:
connecting the battery pack to an inverter of the electric vehicle;
controlling the discharging of the battery pack based on the first discharge voltage; and
increasing a cumulative number of operations of the first discharge voltage mode.

3. The method as claimed in claim 2, further comprising determining whether the cumulative number of the operations of the first discharge voltage mode is less than a first number;
wherein the setting a discharge voltage of the battery pack in the first discharge voltage mode comprises:
setting the discharge voltage of the battery pack in the first discharge voltage mode to the first discharge voltage when the cumulative number of the operations of the first discharge voltage mode is less than a first number.

4. The method as claimed in claim 2 or 3, further comprising indicating the battery pack is exhausted when the cumulative number of the operations of the first discharge voltage mode is greater than or equal to a first number.

5. The method as claimed in any one of claims 1 to 4, further comprising
receiving a second ignition-on signal while the battery pack is not charged after the discharging the battery pack based on the first discharge voltage;
activating a second discharge voltage mode based on the second ignition-on signal;
setting the discharge voltage of the battery pack in the second discharge mode to a second discharge voltage that is lower than the first discharge voltage; and
discharging the battery pack based on the second discharge voltage.

6. The method as claimed in claim 5, further comprising determining whether a cumulative number of the operations of the first discharge voltage mode is less than a first number;
wherein the setting a discharge voltage of the battery pack in the first discharge voltage mode comprises:
setting the discharge voltage of the battery pack in the first discharge voltage mode to the first discharge voltage when the cumulative number of the operations of the first discharge voltage mode is less than a first number.

7. The method as claimed in claim 6, further comprising determining whether a cumulative number of the operations of the second discharge voltage mode is less than a second number;
wherein setting the discharge voltage of the battery pack in the second discharge mode comprises:
setting the discharge voltage of the battery pack in the second discharge voltage mode to the second discharge voltage when the cumulative number of the operations of the second discharge voltage mode is less than a second number.

8. The method as claimed in claim 7, wherein the second number is less than the first number.

9. The method as claimed in any one of claims 1 to 8, wherein anodes of the battery cells comprise a mixture of graphite and silicon as an anode active material.

10. The method as claimed in any one of claims 1 to 9, wherein activating a first discharge voltage mode comprises:
activating the first discharge voltage mode when a remaining capacity of the battery pack is lower that a predetermined threshold.

11. An apparatus for controlling driving of an electric vehicle that uses a battery pack comprising battery cells as a power source, the apparatus comprising:
a communication circuit configured to receive a first ignition-on signal; and
a control circuit configured to activate a first discharge voltage mode in response to the first ignition-on signal and to set a discharge voltage of the battery pack in the first discharge voltage mode to a first discharge voltage that is lower than a normal discharge voltage of a normal driving mode, and to discharge the battery pack based on the first discharge voltage.

12. The apparatus as claimed in claim 11, wherein the control circuit is configured to determine a cumulative number of operations of the first discharge voltage mode, and to operate in the first discharge voltage mode when the cumulative number of the operations is less than a first number.

13. The apparatus as claimed in claim 11 or 12,
wherein the communication circuit is further configured to receive a second ignition-on signal while the battery pack is not charged after the control circuit discharged the battery pack based on the first discharge voltage; and
wherein the control circuit is configured to set the discharge voltage of the battery pack in the second discharge mode to a second discharge voltage that is lower than the first discharge voltage and discharge the battery pack based on the second discharge voltage.

14. The apparatus as claimed in claim 13, wherein the control circuit is configured to determine whether a cumulative number of the operations of the first discharge voltage mode is less than a first number and set a discharge voltage of the battery pack in the first discharge voltage mode to a first discharge voltage that is lower than a normal discharge voltage when the cumulative number of the operations of the first discharge voltage mode is less than a first number.

15. The apparatus as claimed in claim 14, wherein the control circuit is configured to determine whether a cumulative number of the operations of the second discharge voltage mode is less than a second number and set the discharge voltage of the battery pack in the second discharge voltage mode to the second discharge voltage when the cumulative number of the operations of the second discharge voltage mode is less than a second number.
